# EUROPEAN PATENT SPECIFICATION

(11) **EP 1 153 682 B1**
(45) Date of publication and mention of the grant of the patent: **13.04.2005**
(21) Application number: 01110869.3
(22) Date of filing: 04.05.2001
(51) Int. Cl.: B23B 3/16, B23Q 1/01, B23Q 1/25, B23Q 39/02

(54) **Machine tool**
Werkzeugmaschine
Machine-outil

(30) Priority: 08.05.2000 JP 2000134431
(43) Date of publication of application: 14.11.2001
(73) Proprietor: Mori Seiki Co., Ltd., Yamatokoriyama-shi, Nara-ken 639-1183 (JP)
(72) Inventor: Masamitsu, Nakaminami, c/o Mori Seiki Co., Ltd., Yamatokoriyama-shi, Nara-ken, 639-1183 (JP); Jun, Adachi, c/o Mori Seiki Co., Ltd., Yamatokoriyama-shi, Nara-ken, 639-1183 (JP)
(74) Representative: Kern, Ralf M., Dipl.-Ing.

(56) References cited:
- EP-A- 0 319 731
- DE-A- 4 441 106
- GB-A- 2 215 251
- US-A- 5 293 793
- US-A- 5 655 423
- PATENT ABSTRACTS OF JAPAN vol. 012, no. 428 (M-762), 11 November 1988 (1988-11-11) & JP 63 162101 A (OKUMA MACH WORKS LTD), 5 July 1988 (1988-07-05)

## Description

### BACKGROUND OF THE INVENTION

The present invention relates to a machine tool in which a carriage is disposed on a fixed bed on one side thereof (front side) nearer to an operator while a headstock is provided on its farther side (rear side of the carriage) from the operator.

As an example, there has conventionally been provided a mass-production type machine tool (NC lathe) in which carriages each with a tool post mounted thereon are provided left and right on the front side (nearer side to the operator) of the fixed bed, as viewed from the operator, the tool posts and the carriages being movable in X-axis and Z-axis directions, respectively, while a headstock is fixedly set on the rear side (farther side from the operator) between the two tool posts.

In this type of machine tool, a workpiece is loaded onto the spindle of the headstock, and then, while the workpiece is being driven into rotation, the left-and-right carriages and tool posts are moved relative to each other, by which the workpiece is subjected to a specified cutting process.

With this conventional machine tool, unfortunately, because of its structure that the headstock is fixedly disposed in the rear of the left-and-right carriages, workpiece loading/unloading work for replacing the workpiece of the spindle with another has to be done in a depth of the fixed bed, causing a problem of lower operativity.

In the US-A-5293793 there is disclosed a machine tool in which a carriage with a tool post mounted thereon is provided on a fixed bed on one side thereof nearer to an operator while a headstock is provided on the other side of the fixed bed farther from the operator, where a workpiece loaded on the headstock is subjected to a specified cutting process by moving the carriage at the tool post relatively to each other, the machine tool further comprising:
a head stock base for fixing the headstock thereon, the headstock being moveable so that the headstock can be travelled between a workpiece machining position where the workpiece is machined on the side farther from the operator and a workpiece loading/unloading position that workpiece is loaded on the side nearer to the operator.

### SUMMARY OF THE INVENTION

It is an object of the invention to provide a machine tool according to the state of the art cited which his further developed favourably.

This object is attained by the characterizing features of claim 1. Preferred embodiments of the invention are illustrated in the subclaims.

In order to achieve the above object, in a first embodiment of the invention, there is provided a machine tool in which a carriage with a tool post mounted thereon is provided on a fixed bed on one side thereof nearer to an operator while a headstock is provided on the other side of the fixed bed farther form the operator, where a workpiece loaded on the headstock is subjected to a specified cutting process by moving the carriage and the tool post relatively to each other, the machine tool further comprising: a headstock base for fixing the headstock thereon, the headstock base being movable so that the headstock can be traveled between a workpiece machining position where the workpiece is machined on the side farther from the operator and a workpiece loading/unloading position where the workpiece is loaded and unloaded on the side nearer to the operator and the headstock base is fixed to the bed (2) during machining process.

In a second embodiment of the invention, in the machine tool as described in the first embodiment, the carriage is disposed at each of left and right side portions of the fixed bed, as viewed from the operator, the headstock is disposed at a central portion between the left-and-right carriages of the fixed bed, and a chip collecting space is formed by cutting out a portion of the fixed bed surrounded by the left-and-right carriages and the headstock positioned at the work machining position.

In a third embodiment of the invention, in the machine tool as described in the second embodiment, the fixed bed has a tunnel formed therein, the tunnel communicating with the chip collecting space and extending toward a counter-operator side, whereby chips that have fallen into the chip collecting space are collected through a counter-operator side opening of the tunnel.

With the machine tool according to the present invention, since the headstock is fixed to the headstock base and further the headstock base is set so as to be movable between the workpiece machining position on the farther side from the operator and the workpiece loading/unloading position on the nearer side to the operator, the workpiece loading/unloading work can be performed at a place in proximity to the operator on the front side of the fixed bed. Thus, the operativity can be improved.

With the machine tool in the second embodiment of the invention, since the chip collecting space is formed at a portion surrounded by the left-and-right carriages of the fixed bed and the headstock, chips generated through machining process fall into the fixed bed, making no obstacles to the workpiece loading/unloading work. Thus, the operativity can be improved.

With the machine tool in the third embodiment of the invention, since the fixed bed has a tunnel formed therein, the tunnel communicating with the chip collecting space and extending rearward, chips that have fallen into the space can be discharged through the tunnel rearward of the machine counter to the operator side. Thus, both the workpiece loading/unloading work and the chip collecting work can be easily performed.

### BRIEF DESCRIPTION OF THE DRAWINGS

Fig. 1 is a perspective view for explaining an NC lathe according to an embodiment of the invention; and
Fig. 2 is a perspective view of the NC lathe.

### DETAILED DESCRIPTION OF THE PREFERRED EMBODIMENT

Hereinbelow, an embodiment of the present invention is described with reference to the accompanying drawings.

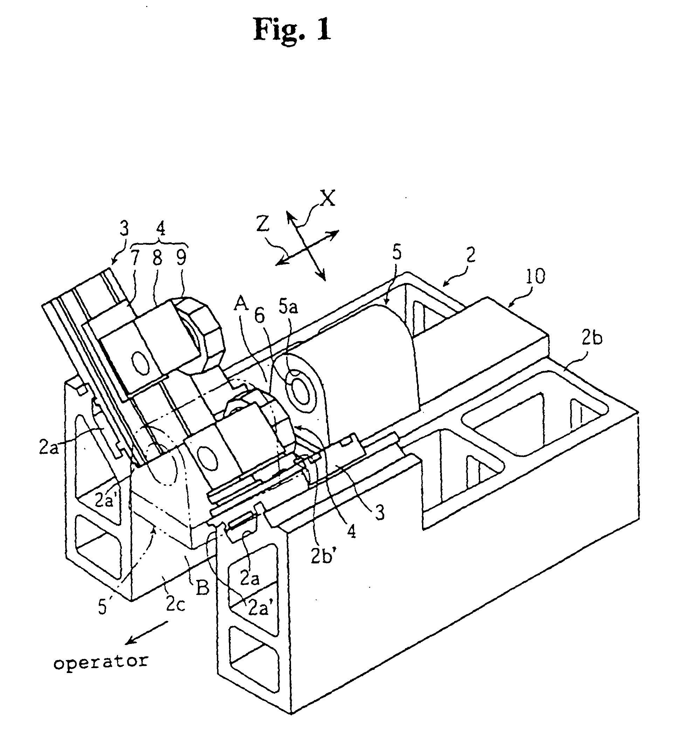

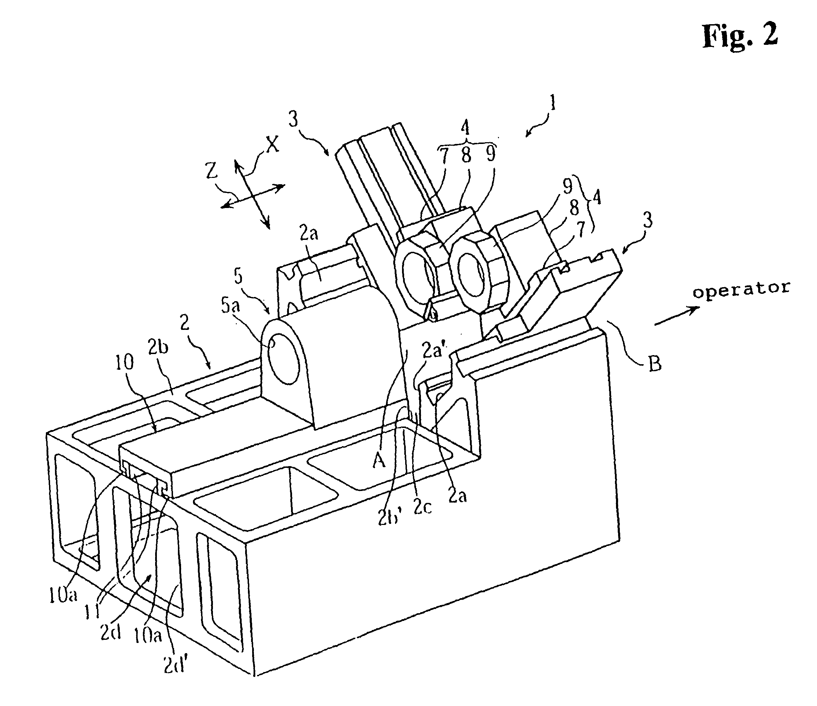

Figs. 1 and 2 are views for explaining a machine tool (NC lathe) in accordance with one embodiment of the invention. Fig. 1 is a perspective view of the NC lathe as viewed from an oblique front, and Fig. 2 is a perspective view of the NC lathe as viewed from an oblique rear. The terms, front and rear, left and right are referred to in this embodiment as they are viewed from the operator side, that is, the front side means one side nearer to the operator, the farther side means the opposite side farther from the operator, the left side means the left side of the operator, and the right side means the right side of the operator.

Referring to the figures, reference numeral 1 denotes an NC (Numerically Controlled) lathe to be used for the machining of an aluminum wheel as an example. In this machine tool, as viewed from operator, a pair of left-and-right carriages 3, 3 are provided on the left and right side in a front end portion (on one side nearer to the operator) of a fixed bed 2 so as to be movable in a Z-axis direction (back-and-forth direction), tool posts 4 are mounted on the individual carriages 3, respectively, so as to be movable in an X-axis direction (oblique left-and-right directions), and a headstock 5 is disposed on a deeper side (on the side farther from the operator) of the fixed bed 2 between the left-and-right carriages 3 with the axis line of the headstock 5 directed along the Z-axis direction.

The headstock 5 has a spindle mounting hole 5a extending along the axis of the headstock, and a spindle 6 is rotatably inserted into the spindle mounting hole 5a via a plurality of bearings (not shown). On this spindle 6, a chuck (not shown) for gripping the workpiece is mounted at a front end portion of the spindle 6.

Each of the tool posts 4 is generally so structured that a tool-post main body 8 is fixed to a tool-post base 7 slidably supported on the carriage 3, while a turret head 9 with a plurality of tools (not shown) mounted thereon is provided on the rear face of the tool-post main body 8 so as to be rotationally indexable. The tool-post base 7 is reciprocatingly driven in the X-axis direction by a drive mechanism made up of a servomotor, a ball screw and the like which are unshown.

The fixed bed 2 is a rectangular-parallelopiped one which is formed by casting process and which extends in the back-and-forth direction. Left-and-right slanted portions 2a, 2a presenting a V-shape as viewed from the front are integrally formed at the front portion of this fixed bed 2, while a flat portion 2b contiguous to the slanted portions 2a and having a stepped-down configuration is formed in the rear portion of the fixed bed 2.

The carriages 3 are slidably supported by the left-and-right slanted portions 2a, and each carriage 3 is reciprocatingly driven in the Z-axis direction by a drive mechanism made up of a servomotor, a ball screw and the like which are unshown.

A headstock base 10 is provided on top of the flat portion 2b of the fixed bed 2. This headstock base 10 has a rectangular platy form extending over the entire length of the flat portion 2b in its back-and-forth direction, where the headstock 5 is mounted and fixed at a front end portion of the headstock base 10. Also, a pair of rails 11, 11 extending parallel to the Z-axis direction are fixedly set on the flat portion 2b, and left-and-right guide portions 10a, 10a formed on the bottom face of the headstock base 10 are slidably engaged with the rails 11.

The headstock base 10 is reciprocatingly driven by a drive mechanism made up of a servomotor, a ball screw and the like or a cylinder mechanism, which are unshown, between a workpiece machining position A where the workpiece is machined in the rear of the carriages 3 and a workpiece loading/unloading position B where the machined workpiece is replaced with a next-target workpiece at an operator-side end portion of the fixed bed 2.

Further, a clamp mechanism implemented by an unshown hydraulic cylinder is provided between the headstock base 10 and the fixed bed 2. During the machining process, the headstock base 10 is fixedly positioned to the workpiece machining position A by the clamp mechanism.

A recessed portion 2c having a recessed form as seen in a plan view is cut out, being defined by lower end portions 2a' of the left-and-right slanted portions 2a and a front end portion 2b' of the flat portion 2b in the fixed bed 2. This recessed portion 2c provides a chip collecting space surrounded by the left-and-right carriages 3 and the headstock 5 positioned in the workpiece machining position A.

Also, a tunnel portion 2d communicating with the recessed portion 2c and extending rearward is formed within flat portion 2b of the fixed bed 2, with a rear end 2d' of the tunnel portion 2d opened at the rear end face of the flat portion 2b.

In the NC lathe 1 of this embodiment, the carriages 3 and the tool posts 4 are moved in the Z-axis and x-axis directions, respectively, relative to each other, by which the workpiece loaded on the spindle 6 is subjected to a specified cutting process. In this case, the two tool posts 4 can either simultaneously perform the machining of the workpiece or alternately perform the machining one by one.

When the machining of the workpiece is completed, the carriages 3 and the tool posts 4 move to a predetermined standby position, staying on a standby state, while the headstock base 10 moves forward so that the headstock 5 is shifted to the workpiece loading/unloading position B (see two-dot chain line in Fig. 1). At this workpiece loading/unloading position B, the machined workpiece is unloaded, and the next-target workpiece is loaded.

Chips generated during the machining of the workpiece fall into the cut-out recessed portion 2c, and are collected through the rear-end opening 2d' of the tunnel portion 2d.

As described above, according to this embodiment, the headstock 5 is fixed to the headstock base 10, and the headstock base 10 is moved between the workpiece machining position A, where the workpiece is machined on the rear side between the left-and-right carriages 3, and the workpiece loading/unloading position B, where the workpiece is replaced at the end portion on the operator side. Therefore, the workpiece loading/unloading work can be performed at a place in proximity to the operator, so that the operativity can be improved.

In this embodiment, since the recessed portion 2c forming a chip collecting space is provided by cutout at the front portion of the fixed bed 2, chips generated through machining process fall into the recessed portion 2c of the fixed bed 2, making no obstacle to the workpiece loading/unloading work. Thus, the operativity of workpiece loading/unloading can be improved also in this respect.

Further, since the tunnel portion 2d extending rearward in contiguity to the recessed portion 2c is formed within the flat portion 2b of the fixed bed 2, chips that have fallen from the rear-end opening 2d' of the tunnel portion 2d into the recessed portion 2c can be collected, so that both the workpiece loading/unloading work and the chip collecting work can be easily achieved.

In addition, the workpiece loading/unloading work and the chip discharging work are not necessarily limited to the case where the work is done by the operator. The workpiece loading/unloading work may be performed automatically by robot, and with a chip conveyor stretched from the recessed portion 2c to the tunnel portion 2d, chips may be continuously discharged automatically by the chip conveyor.

Furthermore, although the above embodiment has been described on a case where a pair of left-and-right carriages are provided on the fixed bed, the present invention is of course applicable also to cases where one carriage is provided.

## Claims

1. A machine tool in which a carriage (3) with a tool post (4) mounted thereon is provided on a fixed bed (2) on one side thereof nearer to an operator while a headstock (5) is provided on the other side of the fixed bed (2) father from the operator, where a workpiece loaded on the headstock (5) is subjected to a specified cutting process by moving the carriage (3) and the tool post (4) relatively to each other, the machine tool further comprising:
a headstock base (10) for fixing the headstock (5) thereon, the headstock base (10) being movable so that the headstock (5) can be traveled between a workpiece machining position where the workpiece is machined on the side farther from the operator and a workpiece loading/unloading position (8) where the workpiece is loaded and unloaded on the side nearer to the operator **characterized in that** the tool post (4) is movable in X and Z directions, and the headstock base (10) is fixed to the bed (2) during machining process and moves toward the operator's side in Z direction only for workpiece replacement process.

2. The machine tool according to claim 1, wherein the headstock (5) overhangs from the bed (2) for workpiece replacement process.

3. The machine tool according to claim 1 or 2, wherein the headstock (5) moves to a position where the headstock (5) and the tool post (4) are juxtaposed.

4. The machine tool according to any claim of claims 1 to 3, wherein the carriage (3) is disposed at each of left and right side portions of the fixed bed (2), as viewed from the operator, the headstock (5) is disposed at a central portion between the left- and- right carriages (3) of the fixed bed (2), and a chip collecting space is formed by cutting out a portion of the fixed bed (2) surrounded by the left-and-right carriages (3) and the headstock (5) positioned in the work machining position.

5. The machine tool according to claim 4, wherein the fixed bed (2) has a tunnel (2d) formed therein, the tunnel (2d) communicating with the chip collecting space and extending toward a counter-operator side, whereby chips that have fallen into the chip collecting space are collected through a counter-operator side opening of the tunnel (2d).

## Patentansprüche

1. Werkzeugmaschine, in der ein Schlitten (3) mit einem darauf montierten Werkzeughalter (4) auf einem ersten feststehenden Bett (2) auf einer Seite davon nahe einem Bedienungsmann vorgesehen ist, während ein Spindelkasten (5) auf der anderen Seite des feststehenden Bettes (2) weiter von dem Bedienungsmann weg vorgesehen ist, wobei ein Werkstück, das auf dem Spindelkasten geladen ist, einem spezifizierten Schneidprozeß unterworfen wird, indem der Schlitten (3) und der Werkzeughalter (4) relativ zueinander bewegt werden, wobei die Werkzeugmaschine femer umfaßt:
eine Spindelkastenbasis (10) zum darauf Fixieren des Spindelkastens (5), wobei die Spindelkastenbasis (10) so bewegbar ist, daß der Spindelkasten (5) zwischen einer Werkstück-Bearbeitungsposition, wo das Werkstück auf der Seite weiter von dem Bedienungsmann weg bearbeitet wird, und einer Werkstücklade-/Entladeposition (8), wo das Werkstück auf der Seite näher bei dem Bedienungsmann geladen und entladen wird, verfahren werden kann, **dadurch gekennzeichnet, daß**
der Werkzeughalter (4) in X-und Z-Richtung bewegbar ist, und daß die Spindelkastenbasis an dem Bett (2) während des Bearbeitungsprozesses fixiert ist und sich zur Seite des Bedienungsmanns hin in Z-Richtung nur zum Zwecke eines Werkstückaustauschprozesses bewegt.

2. Werkzeugmaschine nach Anspruch 1, worin der Spindelkasten (5) von dem Bett (2) zum Zwekke des Werkstückaustauschprozesses überhängt.

3. Werkzeugmaschine nach Anspruch 1 oder 2, worin der Spindelkasten (5) sich in eine Position bewegt, wo der Spindelkasten (5) und der Werkzeughalter (4) eine da gegenüber angeordnet sind.

4. Werkzeugmaschine nach einem der Ansprüche 1 bis 3, worin der Schlitten bei Blickrichtung von dem Bedienungsmann sowohl auf dem linken als auch auf dem rechten Seitenabschnitt des feststehenden Bettes (2) angeordnet ist, wobei der Spindelkasten (5) an einer zentralen Position zwischen den linken- und rechten Schlitten (3) des feststehenden Bettes (2) angeordnet ist, und wobei ein Spansammelraum gebildet ist durch Ausschneiden eines Abschnittes des feststehenden Bettes (2), der von den Links-und Rechts-Schlitten (3) und dem Spindelkasten 5), der in der Werkstückbearbeitungsposition angeordnet ist, umgeben wird.

5. Werkzeugmaschine nach Anspruch 4, worin das feststehende Bett (2) darin mit einen Tunnel (2d) ausgebildet hat, wobei der Tunnel (2d) mit dem Spansammelraum in Verbindung steht und sich auf die von dem Bedienungsmann abgewandte Seite erstreckt, wobei Späne, die in den Spansammelraum gefallen sind, durch eine Öffnung auf der dem Bedienungsmann gegenüberliegenden Seite des Tunnels (2d) gesammelt werden.

## Revendications

1. Machine-outil où un chariot (3) avec un porte-outil (4) monté là dessus est prévu sur un cadre fixe (2) sur un côté de celui plus proche d'un opérateur pendant qu'une tête d'entraînement (5) est prévue sur l'autre côté du cadre fixe (2) plus loin de l'opérateur, où une pièce à usiner chargée sur la tête d'entraînement (5) est assujettie à un procédé de coupe spécifique par le mouvement du chariot (3) et du porte-outil (4) relativement à l'un l'autre, la machine-outil comprenant en outre:
- un support pour la tête d'entraînement (10) pour la fixation de la tête d'entraînement (5) là dessus, le support de la tête d'entraînement (10), étant mobile de sorte que la tête d'entraînement (5) puisse être déplacée entre une position d'usinage de la pièce à usiner où la pièce à usiner est coupée sur le côté plus éloigné de l'opérateur et une position de chargement/déchargement de la pièce à usiner (8) où la pièce à usiner est chargée et déchargée sur le côté plus proche de l'opérateur, **caractérisée en ce que** le porte-outil (4) est mobil dans les directions X et Z, et le support de la tête d'entraînement (10) est fixé sur le cadre (2) pendant le procédé d'usinage et se meut vers le côté de l'opérateur dans la direction Z seulement pour l'opération de remplacement de la pièce à usiner.

2. Machine-outil selon la revendication 1, où la tête d'entraînement (5) fait saillir du cadre (2) pour l'opération de remplacement de la pièce à usiner.

3. Machine-outil selon la revendication 1 ou 2, où la tête d'entraînement (5) se meut à une position où la tête d'entraînement (5) et le porte-outil (4) sont juxtaposés.

4. Machine-outil selon l'une quelconque des revendications 1 à 3, où le chariot 3 est disposé sur chacune des portions latérales gauche et droite du cadre fixe (2) comme vues à partir de l'opérateur, la tête d'entraînement (5) est disposée dans une portion centrale entre les chariots gauche et droit (3) du cadre fixe (2) et un espace de collection du copeau est formé par le découpage d'une portion du cadre fixe (2) contoumée par les chariots gauche et droit (3) et la tête d'entraînement (5) positionnée dans la position d'usinage de la pièce.

5. Machine-outil selon la revendication 4, où le cadre fixe (2) a un tunnel (2d) formé là dedans, le tunnel (2d) communiquant avec l'espace de collection du copeau et s'étendant vers un côté opposé de l'opérateur, de cette façon les copeaux qui ont tombé dans l'espace de collection du copeau sont collectés par une ouverture sur le côté opposé à l'opérateur du tunnel (2d).
